# EUROPEAN PATENT SPECIFICATION

(11) **EP 1 626 898 B1**
(45) Date of publication and mention of the grant of the patent: **30.07.2008**
(21) Application number: 03816889.4
(22) Date of filing: 09.05.2003
(51) Int. Cl.: B63J 2/04, F24F 3/044, F24F 3/00

(54) **VENTILATION SYSTEM AND METHOD FOR A SHIP WITH LOW TEMPERATURE SUPPLY AIR THAT BEFORE ENTERING A ROOM IS MIXED WITH ROOM AIR**
BELÜFTUNGSSYSTEM UND VERFAHREN FÜR EIN SCHIFF, BEI DEM NIEDRIGTEMPERATURZURLUFT VOR DEM EINTRITT IN EINEN RAUM MIT RAUMLUFT GEMISCHT WIRD
SYSTEME ET PROCEDE DE VENTILATION POUR BATEAU AVEC MELANGE D'UN AIR D'ALIMENTATION FROID A DE L'AIR CHAUD AVANT ENTREE DANS UN LOCAL

(43) Date of publication of application: 22.02.2006
(73) Proprietor: Callenberg Fläkt Marine AB, 431 87 Mölndal (SE)
(72) Inventor: GÖTMALM, Örjan, S-429 30 KULLAVIK (SE)
(74) Representative: Szelagowski, Helen
(86) International application number: PCT/SE2003/000769
(87) International publication number: WO 2004/098989

(56) References cited:
- WO-A1-99/51918
- WO-A1-99/58399
- GB-A- 739 955
- SE-C2- 508 633

## Description

### TECHNICAL FIELD

The present invention relates to a ventilation system for supply and treatment of air to a plurality of spaces enclosed in a building or the like, and to a device for carrying out the method.

The invention relates in particular to a ventilation system in a ship. Hereinafter in the text, the term ship shall also include other movable or fixed installations at sea, so-called offshore installations.

Hereinafter, a ventilation system shall mean a system provided for ventilation and comprising functions such as supply of air, discharge of used air, dehumidification of air, cooling and/or heating as well as dehumidification of air, but it may also comprise filtering, enthalpy return, tempering, humidification and recirculation of air.

The ventilation system comprises at least one air-treatment unit comprising at least one fan and an associated system of ducts. The ventilation system may also comprise a locally arranged unit for tempering and/or dehumidification of the air volume of an individual space.

### BACKGROUND ART

When ventilating spaces, for example cabins and other smaller and non-public spaces, on board a ship, the use of a system type called single-duct system dominates. In a single-duct system, the spaces are supplied with pre-treated supply air. Usually, filtered, cooled or heated and dehumidified or humidified fresh air from the outside of the ship is supplied via a tubular system of ducts. The volume of air supplied to a space is approximately the same as the volume of air evacuated from the same space in exhaust-air ducts connected to fans that evacuate used air to the outside of the ship. The exhaust-air ducts extend either directly from the space from which air is to be evacuated or from an adjoining space communicating with the space from which air is to be evacuated, for example through one or more air gaps in a door.

With a single-duct system, spaces may be ventilated and tempered with the aid of 100 per cent fresh air from the outside of the ship, which results in a simple system with a very good degree of ventilation at the expense of a relatively space-demanding system of ducts and a high energy consumption. Such a system is known from GB-A-739955.

In the case of larger spaces, so-called public spaces, there is also used a form of single-duct system, where the ducts are often of a square cross section. The spaces are usually supplied with 100 per cent fresh, pre-treated air and energy recovery occurs via enthalpy exchange between supply air and exhaust air in an air-treatment unit. When such spaces are empty or utilized to a small extent, the volume of supplied air is reduced to a corresponding extent. In certain cases, the exhaust air may be recirculated via an air-treatment unit to reduce the energy consumption at the expense of the degree of ventilation.

The ducts for a single-duct system are normally made of metal, usually steel tube, in the form of prefabricated so-called spiral tubes comprising an outer tube, an inner tube and in certain cases a thermal insulation in the form of mineral wool in the concentric space between the tubes. Thermal insulation is usually used for supply-air ducts. The dimensions of a single-duct system are primarily determined by the maximum pressurization through the fan and the available space for laying the ducts, which in turn controls the maximum air volume and hence the air speed and pressure drop. Inversely, a smaller air volume results in a smaller duct dimension for the same pressurization of the fan and pressure drop through the system of ducts.

In ships, and in particular in passenger ships, considerable demands are placed on the ventilation system. The installation should be able to offer a comfortable indoor climate, whether the ship is operating in tropical waters or in arctic waters.

In passenger ships of the cruiser type operating in tropical or subtropical waters, it is required that moisture be removed from the outdoor air so that the relative humidity inside the ship shall not be uncomfortably high. The relative atmospheric humidity inside the ship should be below 50% also under tropical conditions. To efficiently dehumidify the air, it is cooled in an air-treatment unit, whereby the so-called dew point is passed and the water steam is condensed on a cold heat-exchanger surface. Hereinafter, the heat exchanger, which cools and dehumidifies the air, will be referred to as a cooling battery. The air-treatment unit may comprise a plurality of heat exchangers. The cooling battery is supplied with a coolant, for example water, a salt solution, or glycol water. The energy consumption for this dehumidification operation is considerable and is determined, for equal conditions, by the air-mass flow passing through the cooling battery.

Normally, an air-treatment unit serves a plurality of cabins and other spaces by means of a branched system of ducts for supply air and exhaust air. It is known to place those system parts of the air-treatment unit that attend to the supply air and the exhaust air, respectively, separately but close to each other such that the energy recovery between the system parts may be arranged in a simple manner. Such a recovery system may comprise heat exchangers and/or systems for enthalpy transfer, which is usually carried out by means of a so-called enthalpy wheel, which also, for example, transfers moisture from the supply air to the exhaust air. All the spaces connected to an air-treatment unit are thus supplied with the same pre-treated air in spite of the fact that the individual spaces may have quite varying requirements for comfort and cooling. Normally, it should be possible to provide a level of comfort with a uniform temperature of about 22-24 °C under all circumstances and in all climates.

It is also common to use systems that utilize the recirculation of room air in an air-treatment apparatus, placed in the room, in combination with pre-treated supply air that is supplied to the space via ducts from a central air-treatment unit to provide for sufficient ventilation. In such a system, somewhat less cooling work is required compared with the previously described single-duct system since a smaller volume of outdoor air, which is often very moist, needs to be dried by condensation and/or enthalpy transfer between supply air and exhaust air over a rotating enthalpy exchanger. Admittedly, the recirculated air is also cooled and dried, but it is normally drier and cooler than the outdoor air. With this type of system, spaces may be ventilated with a smaller volume of fresh air, or about 40% compared with a single-duct system. The space is tempered with the fresh air and with the air that is recirculated in the space. This results in a considerably smaller system of ducts at the expense of increased system and apparatus complexity as well as a considerably lower degree of ventilation with an ensuing risk of musty air and growth of microorganisms.

In the above-described marine system types, which have been in common use for more than 40 years, a maximum difference between the desired room-air temperature and the supply-air temperature of 10 °C, the so-called subnormal temperature, is prescribed (according to the SS-ISO 7547 standard) in order that the supply of air should not be experienced to be uncomfortably cold and give too large temperature differences through the room volume. This applies particularly to single-duct systems. In this way, a cabin is supplied with air from a central air-treatment unit, normally of a temperature of about 12 °C to obtain a final room-air temperature of normally about 22 °C. At decreasing thermal load in the cabin and in the case of single-duct systems, the volume of supplied air is reduced from 100 % to a minimum of 50 %. At a really low thermal load, or when a warmer cabin is desired, an air heater may be connected at the end of the supply-air channel.

To compensate for the heating, typically about 2 °C, of the supply air that takes place on its way through the system of ducts, which, of course, is surrounded by the warmer indoor air in the ship, the air is cooled in conventional manner to about 10 °C in the air-treatment unit.

The prescribed maximum subnormal temperature of the supply air thus limits the possibilities of reducing the volume of air that must be pre-treated and is therefore one of the most important dimensioning factors in marine air-conditioning plants, both as regards the required power, energy consumption, duct dimensions, and costs of purchase, installations and operation.

Since the space on board a ship is limited and the energy resources are limited, there is a need to reduce the volume of air that must be pre-treated in an air-treatment unit while at the same time maintaining the prescribed maximum subnormal temperature of the supply air to the space. If the volume of air that must be pre-treated could be reduced, this would entail a lower specific weight, a lower energy consumption, reduced duct dimensions, and a lower cost of the ventilation system.

### SUMMARY OF THE INVENTION

The object of the invention is to provide a ventilation system that involves lower consumption of energy, that is less expensive, that is less space-demanding and that requires lower specific effect than prior art systems, and to provide a method for utilizing the ventilation system.

This object is achieved according to the invention by means of a ventilation system according to the characteristic features described in the characterizing portion of the independent claim 1 and with a method according to the characteristic features described in the characterizing portion of the independent method claim 7. Advantageous embodiments are described in the characterizing portions of the dependent claims.

In the ventilation of a ship, supply air is treated in at least one air-treatment unit comprising at least one cooling battery through which the supply air flows and is dehumidified and cooled down to a dew-point temperature in the interval of 2-9 °C, preferably in the interval of 3-5 °C. The cooled and dry supply air is then transported in a supply-air duct to at least one space for ventilation of the comfort zone of the space. Air present in the space, also called room air, is utilized for heating the cooled supply air by mixing the air present in the space with the supply air on the way of the supply air between the cooling battery and the comfort zone of the space.

By space are meant primarily cabins, public spaces and technical spaces such as, for example, storages, lift shafts and distribution boards. For a cabin, the room air is mixed with the cooled supply air, for example above a ceiling located in the cabin and usually concealing cables and ducts for ventilation, electricity and water. The intermixing of the air present in the cabin in this case occurs in the space.

By comfort zone is meant hereinafter that part of the space that is to be ventilated and tempered. The comfort zone is usually limited by deck (floor), bulkheads (walls) and ceiling.

By air-treatment unit are meant separate devices with corresponding functions. For example, a filter, a cooling battery and a fan may be separately erected but have the same function as an air-treatment unit.

Advantageous further developments of the invention will be clear from the following description and claims.

According to a further development of the invention, the device may be designed so that the room air is intermixed with the cooled supply air on the way of the supply air between the cooling battery and the inlet of the supply-air duct into the space. To achieve as large energy savings as possible, the room air is suitably intermixed with the cooled supply air as far downstream as is practically possible. The closer to the inlet of the supply air into the space, the smaller the space that is needed for laying the ducts.

The supply air is dehumidified, for example, by cooling the supply air in the cooling battery. Before mixing in the warmer room air, the transported supply air has a temperature considerably lower than the temperature of the room air. The supply air is preferably cooled to a temperature in the interval of 3-5 °C, for example 4 °C, to arrive at the space somewhat heated or about 7 °C. The heating increases to 3 °C in case of a greater temperature difference between the supply air and the air surrounding the duct compared with the case, as described under the background art, where the supply air maintains a temperature of 12 °C. This loss of 3 °C is partially apparent since a diffuse and desirable cooling of the interior of the ship occurs in this way via the outside of the ducts. Cooling of the interior of the ship is normally required during all seasons because of thermal loads from people, machines and certain electricity consumers.

A cooling to 4 °C in the cooling battery entails an apparent subnormal temperature of about 15 °C at an ordinary room temperature of 22 °C instead of the maximally allowed subnormal temperature of 10 °C. However, by intermixing the warmer air present in the space with the 7-degree supply air before it reaches the comfort zone, a subnormal temperature that is less than or equal to 10 °C is easily achieved. The intermixing may occur, for example, by induction or pressurization of air present in the space.

The cooled supply air and the flow of air present in the space are utilized for improved intermixing of air in the space compared with the case where the supply air maintained a temperature of 12 °C and the air present in the space was not intermixed with the supply air.

The ventilation system may be designed with a variable volume of supply air, with a constant volume of supply air, or with a combination of variable and constant volume of supply air. A variable volume of air means that the volume of supply air varies depending on, for example, the outdoor climate; for example, the volume of cooled supply air is reduced in the evening when the temperature is cooler outside.

One advantage of the invention is that by cooling the supply air, prior to distribution in the system of ducts, approximately an additional 6 °C compared with the prior art, the volume of treated air in the air-treatment unit is reduced in direct proportion to the difference between the ratio of "previous subnormal temperature to new subnormal temperature", that is, to 10/15, or nearly 67% of the original volume of air.

This, in turn, implies that the pressure drop and hence the required fan performance decrease greatly and/or that a system of ducts with smaller dimensions may be used without having to increase the fan performance.

A reduced volume of air that has to be treated implies that the duct dimensions may be reduced and that space that is set free may be used for, for example, more cabins or for reducing the distance between the decks, which gives a saving in the form of, for example, the amount of steel that is needed for building the ship, which in turn results in a considerable saving of weight.

In addition to the above, the necessary power (mass flow x enthalpy changes) for cooling and/or dehumidifying the outdoor air decreases to 80 % compared with the method according to the prior art since the air mass decreases to a larger extent than the enthalpy change increases.

Another advantage of the invention is that it is easier to maintain the air humidity lower than 50 % inside the ship, since the colder supply air has a considerably lower absolute humidity after it has been blown into the space compared with the prior art. In this way, the final air humidity is reduced in the space and in the parts of the ship that communicate with this space. This entails a reduced risk of condensation on cold duct parts in spite of the fact that these have a somewhat colder surface than when using conventional technique with retained insulation thickness.

Since the indoor air will be drier, the indoor temperature may be raised somewhat during the hot season and when operating in tropical waters without the climate on board being experienced as warmer. This reduces the energy consumption on board the ship.

A further advantage of the invention is that the colder supply air inside the ducts and in parts of the air-treatment units suppresses the growth of microorganisms in the system of ducts and the drier indoor air reduces the risk of spontaneous formation of mould in, for example, textiles on board the ship and in exhaust-air systems.

### BRIEF DESCRIPTION OF THE DRAWINGS

The invention will be explained in greater detail by description of embodiments with reference to the accompanying drawing, wherein
Figure 1 schematically shows a layout of a ventilation system for a ship's cabin according to one embodiment of the invention, and
Figure 2 schematically shows how a ventilation system according to a further embodiment of the invention is designed.

### DESCRIPTION OF THE PREFERRED EMBODIMENTS

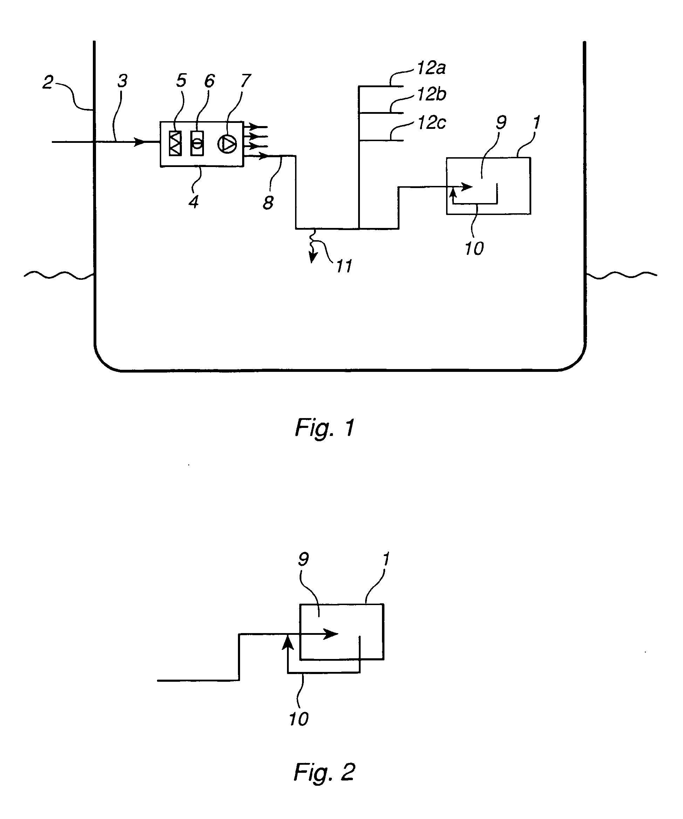

The ventilation system shown in Figure 1 shows ventilation of at least one cabin 1 on board a ship 2. In the ventilation system, air is taken from the outside of the ship, so-called supply air 3, which is treated in an air-treatment unit 4. The supply air 3 passes through a filter 5, then through one or more heat exchangers, one of which being a cooling battery 6 for cooling and/or dehumidification of the supply air. The air-treatment unit also comprises a fan 7 to force out the air in the system of ducts that is connected to the respective air-treatment unit 4. The cooled supply air is then transported in a supply-air duct 8 to the cabin 1 for ventilation of the comfort zone 9 of the cabin. The supply-air duct 8 is usually branched up into a plurality of ducts 12, 12b, 12c for transport of cooled supply air to further cabins and/or technical spaces.

The air present in the room, hereinafter designated room air, which usually maintains a temperature of between 22 and 24 °C, is utilized for heating the cooled supply air by intermixing the room air with the supply air on the way of the supply air between the cooling battery 6 and the comfort zone 9 of the space. This is done through an exhaust-air duct 10 that connects the supply-air duct 8 above a ceiling (not shown) arranged in the cabin, above which a space is provided for pulling, inter alia, cables and ducts for electricity, ventilation, and water. The intermixing of the room air may occur, for example, by induction or pressurization of the room air. The intermixing of the room air may occur by means of a mixing device (not shown).

Induction means that the supply air in the supply-air duct 8 and the air that is present in the cabin 1 and that is to be intermixed are given different pressure levels by taking various actions with regard to flow characteristics. A fan pressurizes the supply air in the supply-air duct 8, and at the inlet of the room air into the supply-air duct 8 a reduced static pressure level relative to the room pressure is created by a pressure-decreasing change of the air speed such that room air is drawn along in proportion to the volume of supply air and is intermixed with the supply air before it reaches the cabin again together with the supply air.

Another way of intermixing warmer room air with the colder supply air is so-called ejection, whereby the supply air is supplied to the space at a relatively high speed through nozzles that create air jets, which in turn draw along with them the surrounding room air which in this way reduces the speed of the supply air and increases its temperature before it reaches the comfort zone adequately cold and at a low speed.

Alternatively, pressurization of the room air takes place in that a fan (not shown), connected to the exhaust-air duct 10, drives air present in the space through the exhaust-air duct 10 to the supply-air duct 8 to be intermixed and finally supplied to the cabin 1.

Since air from the outside of the ship 2 is cooled to, for example, 4 °C prior to distribution in the duct system, the volume of air that needs to be treated in the air-treatment unit 4 is reduced. The cooled air arrives at the cabin 1 somewhat heated, or about 7 °C. The heating of the air on its way from the air-treatment unit to the cabin provides a diffuse and desirable cooling 11 of the ship via the outside of the ducts.

This entails an apparent subnormal temperature of about 15 °C at a normal room temperature of 22 °C instead of 10 °C according to the prior art. This is not allowed or desirable, but by intermixing the warmer room air with the 7-degree supply air before it reaches the comfort zone, a subnormal temperature lower than or equal to 10 °C is achieved.

Still another advantageous embodiment of the invention is shown in Figure 2, where the room air in the cabin is supplied to the cooled supply air at a location outside the cabin via an air duct 10.

Approximately the same amount of supply air that is supplied to the cabin must be evacuated from the cabin. This is done in a known manner, which is described under the background art.

The risk of condensation on tubes and other parts is reduced by reducing the air humidity on board the ship. Since the indoor air in the passenger and crew accommodations is given a reduced relative humidity from typical RH values around 50% to about 35% at an indoor temperature of 22 °C, the risk of condensation on cold duct parts is reduced. In spite of the fact that the air in the ducts is considerably colder than according to the prior art, the insulation of the ducts does not have to be improved. The colder supply air inside the ducts and parts of the air-treatment units also suppresses the growth of microorganisms in the system of ducts and the drier indoor air reduces the risk of spontaneous formation of mould in, for example, textiles on board.

The invention is not limited to the embodiments shown but the person skilled in the art may, of course, modify it in a plurality of ways within the scope of the invention as defined by the claims. Thus, the invention is not limited to cabins but may also be used in public spaces and technical spaces that are to be air-conditioned.

## Claims

1. A ventilation plant for a ship (2) comprising an air-treatment unit (4) with at least one cooling battery (6) adapted to cool and dehumidify a supply air (3), flowing through the air-treatment unit (4), and a supply-air duct (8) for transport of the cooled supply air (3) to at least one space (1) comprising a comfort zone (9), for ventilating the comfort zone (9), **characterised in that** the transported supply air has a temperature that is considerably lower than the room air present in the space (1), that the ventilation plant is adapted to heat the cooled supply air (3) by intermixing the room air, and that the intermixing takes place on the way of the supply air between the cooling battery (6) and the outlet of the supply air into the comfort zone (9) of the space.

2. A ventilation plant according to claim 1, **characterised in that** at least one exhaust-air duct (10) is adapted to pass the room air to the supply-air duct (8), and that the intermixing takes place close to the comfort zone (9).

3. A ventilation plant according to claim 1, **characterised in that** at least one exhaust-air duct (10) is adapted to pass the room air to the supply-air duct (8), and that the intermixing takes place before the inlet of the supply-air duct into the space (1).

4. A ventilation plant according to any of the preceding claims, **characterised in that** the supply air is dehumidified to a dew point in the interval of 2-9 °C.

5. A ventilation plant according to any of the preceding claims, **characterised in that** the supply air is dehumidified to a dew point in the interval of 3-5 °C.

6. A method for ventilating a ship (2), wherein supply air (3) is cooled and dehumidified in at least one air-treatment unit (4) comprising a cooling battery (6), and wherein the cooled supply air (3) is transported in at least one supply-air duct (8) to at least one space (1) comprising a comfort zone (9), for ventilating the comfort zone (9), **characterised in that** the supply air (3) is cooled to a temperature considerably lower than the room air present in the space (1), and that the cooled supply air (3) is heated by intermixing the room air with the supply air on the way of the supply air between the cooling battery (6) and the outlet of the supply air into the comfort zone (9) of the space.

7. A method according to claim 6, **characterised in that** the room air is intermixed with the supply air (3) through at least one exhaust-air duct (10), and that the intermixing takes place close to the comfort zone (9).

8. A method according to claim 6, **characterised in that** the room air is intermixed with the supply air (3) through at least one exhaust-air duct (10), and that the intermixing takes place before the inlet of the supply-air duct (8) into the space (1).

9. A method according to any of claims 6-8, **characterised in that** the supply air (3) is dehumidified to a dew point in the interval of 2-9 °C.

10. A method according to any of claims 6-9, **characterised in that** the supply air (3) is dehumidified to a dew point in the interval of 3-5 °C.

11. A method according to any of claims 6-10, **characterised in that** cooled supply air (3) and air present in the space (1) are utilized for improved intermixing of air in the space (1).

12. A method according to any of claims 6-11, **characterised in that** the supply air (3) is dehumidified by reducing the temperature of the supply air.

13. Use of a ventilation system or a method according to any of the preceding claims for air conditioning of spaces (1) on board a ship.

## Patentansprüche

1. Belüftungsanlage für ein Schiff (2), die eine Luftbehandlungseinheit (4) mit zumindest einem Flächenkühler (6), der geeignet ist eine Zuluft (3) zu kühlen und zu entfeuchten, die durch die Luftbehandlungseinheit (4) strömt, und einen Zuluftkanal (8) umfasst, zum Transport der gekühlten Zuluft (3) zu zumindest einem Raum (1), der eine Komfortzone (9) umfasst, zum Belüften der Komfortzone (9), **dadurch gekennzeichnet, dass** die transportierte Zuluft eine Temperatur aufweist, die erheblich niedriger als die in dem Raum (1) vorhandene Raumluft ist, dass die Belüftungsanlage geeignet ist, die gekühlte Zuluft (3) durch Untermischen der Raumluft zu erwärmen, und dass das Untermischen auf dem Weg der Zuluft zwischen dem Flächenkühler (6) und dem Auslass der Zuluft in die Komfortzone (9) des Raums stattfindet.

2. Belüftungsanlage nach Anspruch 1, **dadurch gekennzeichnet, dass** zumindest ein Abluftkanal (10) geeignet ist, die Raumluft zu dem Zuluftkanal (8) durchzuleiten, und dass das Untermischen nahe der Komfortzone (9) stattfindet.

3. Belüftungsanlage nach Anspruch 1, **dadurch gekennzeichnet, dass** zumindest ein Abluftkanal (10) geeignet ist, die Raumluft zu dem Zuluftkanal (8) durchzuleiten, und dass das Untermischen vor dem Einlass des Zuluftkanals in den Raum (1) stattfindet.

4. Belüftungsanlage nach einem der vorhergehenden Ansprüche, **dadurch gekennzeichnet, dass** die Zuluft auf einen Taupunkt in dem Intervall von 2-9°C entfeuchtet ist.

5. Belüftungsanlage nach einem der vorhergehenden Ansprüche, **dadurch gekennzeichnet, dass** die Zuluft auf einen Taupunkt in dem Intervall von 3-5°C entfeuchtet ist.

6. Verfahren zur Belüftung eines Schiffes (2), wobei Zuluft (3) in zumindest einer Luftbehandlungseinheit (4), die einen Flächenkühler (6) umfasst, gekühlt und entfeuchtet wird, und wobei die gekühlte Zuluft (3) in zumindest einem Zuluftkanal (8) zu zumindest einem Raum (1), der eine Komfortzone (9) umfasst, transportiert wird, zum Belüften der Komfortzone (9), **dadurch gekennzeichnet, dass** die Zuluft (3) auf eine Temperatur gekühlt wird, die erheblich niedriger als die in dem Raum (1) vorhandene Raumluft ist, und dass die gekühlte Zuluft (3) durch Untermischen der Raumluft mit der Zuluft erwärmt wird, auf dem Weg der Zuluft zwischen dem Flächenkühler (6) und dem Auslass der Zuluft in die Komfortzone (9) des Raums.

7. Verfahren nach Anspruch 6, **dadurch gekennzeichnet, dass** die Raumluft durch zumindest einen Abluftkanal (10) mit der Zuluft (3) untermischt wird, und dass das Untermischen nahe der Komfortzone (9) stattfindet.

8. Verfahren nach Anspruch 6, **dadurch gekennzeichnet, dass** die Raumluft durch zumindest einen Abluftkanal (10) mit der Zuluft (3) untermischt wird, und dass das Untermischen vor dem Einlass des Zuluftkanals (8) in den Raum (1) stattfindet.

9. Verfahren nach einem der Ansprüche 6-8, **dadurch gekennzeichnet, dass** die Zuluft (3) auf einen Taupunkt in dem Intervall von 2-9°C entfeuchtet wird.

10. Verfahren nach einem der Ansprüche 6-9, **dadurch gekennzeichnet, dass** die Zuluft auf einen Taupunkt in dem Intervall von 3-5°C entfeuchtet wird.

11. Verfahren nach einem der Ansprüche 6-10, **dadurch gekennzeichnet, dass** gekühlte Zuluft (3) und in dem Raum (1) vorhandene Luft für verbessertes Untermischen von Luft in dem Raum (1) verwendet werden.

12. Verfahren nach einem der Ansprüche 6-11, **dadurch gekennzeichnet, dass** die Zuluft (3) durch Verringern der Temperatur der Zuluft entfeuchtet wird.

13. Verwendung eines Belüftungssystems oder eines Verfahrens nach einem der vorhergehenden Ansprüche, zum Klimatisieren von Räumen (1) an Bord eines Schiffes.

## Revendications

1. Système de ventilation pour navire (2) comprenant une unité de traitement d'air (4) ayant au moins une batterie de refroidissement (6) adaptée pour refroidir et déshumidifier un air d'alimentation (3) circulant dans l'unité de traitement d'air (4) et une conduite d'air d'alimentation (8) pour le transport de l'air d'alimentation refroidi (3) jusqu'à au moins un espace (1) comprenant une zone de confort (9), pour ventiler la zone de confort (9), **caractérisé en ce que** l'air d'alimentation transporté a une température qui est considérablement inférieure à celle de l'air ambiant présent dans l'espace (1), **en ce que** le système de ventilation est adapté pour chauffer l'air d'alimentation refroidi (3) en mélangeant l'air ambiant, et **en ce que** le mélange a lieu sur le trajet de l'air d'alimentation entre la batterie de refroidissement (6) et la sortie de l'air d'alimentation dans la zone de confort (9) de l'espace.

2. Système de ventilation selon la revendication 1, **caractérisé en ce que** au moins une conduite d'air vicié (10) est adaptée pour faire passer l'air ambiant dans la conduite d'air d'alimentation (8), et **en ce que** le mélange se produit près de la zone de confort (9).

3. Système de ventilation selon la revendication 1, **caractérisé en ce que** au moins une conduite d'air vicié (10) est adaptée pour faire passer l'air ambiant dans la conduite d'air d'alimentation (8), et **en ce que** le mélange se produit avant l'entrée de la conduite d'air d'alimentation dans l'espace (1).

4. Système de ventilation selon l'une quelconque des revendications précédentes, **caractérisé en ce que** l'air d'alimentation est déshumidifié à un point de rosée situé dans l'intervalle 2-9 °C.

5. Système de ventilation selon l'une quelconque des revendications précédentes, **caractérisé en ce que** l'air d'alimentation est déshumidifié à un point de rosée situé dans l'intervalle 3-5 °C.

6. Procédé pour ventiler un navire (2), dans lequel de l'air d'alimentation (3) est refroidi et déshumidifié dans au moins une unité de traitement d'air (4) comprenant une batterie de refroidissement (6), et où l'air d'alimentation refroidi (3) est transporté dans au moins une conduite d'air d'alimentation (8) jusqu'à au moins un espace (1) comprenant une zone de confort (9), pour ventiler la zone de confort (9), **caractérisé en ce que** l'air d'alimentation (3) est refroidi à une température considérablement inférieure à celle de l'air ambiant présent dans l'espace (1), et **en ce que** l'air d'alimentation refroidi (3) est réchauffé en mélangeant l'air ambiant avec l'air d'alimentation sur le trajet de l'air d'alimentation entre la batterie de refroidissement (6) et la sortie de l'air d'alimentation dans la zone de confort (9) de l'espace.

7. Procédé selon la revendication 6, **caractérisé en ce que** l'air ambiant est mélangé avec l'air d'alimentation (3) par l'intermédiaire d'au moins une conduite d'air vicié (10), et **en ce que** le mélange se produit près de la zone de confort (9).

8. Procédé selon la revendication 6, **caractérisé en ce que** l'air ambiant est mélangé avec l'air d'alimentation (3) par l'intermédiaire d'au moins une conduite d'air vicié (10), et **en ce que** le mélange se produit avant l'entrée de la conduite d'air d'alimentation (8) dans l'espace (1).

9. Procédé selon l'une quelconque des revendications 6 à 8, **caractérisé en ce que** l'air d'alimentation (3) est déshumidifié à un point de rosée situé dans l'intervalle 2-9 °C.

10. Procédé selon l'une quelconque des revendications 6 à 9, **caractérisé en ce que** l'air d'alimentation (3) est déshumidifié à un point de rosée situé dans l'intervalle 3-5 °C.

11. Procédé selon l'une quelconque des revendications 6 à 10, **caractérisé en ce que** l'air d'alimentation refroidi (3) et l'air présent dans l'espace (1) sont utilisés pour améliorer le mélange de l'air dans l'espace.

12. Procédé selon l'une quelconque des revendications 6 à 11, **caractérisé en ce que** l'air d'alimentation (3) est déshumidifié en diminuant la température de l'air d'alimentation.

13. Utilisation d'un système de ventilation ou d'un procédé selon l'une quelconque des revendications précédentes pour climatiser des espaces (1) à bord d'un navire.
